(19) **Europäisches Patentamt / European Patent Office / Office européen des brevets**

(11) **EP 3 100 403 B1**

(12) **FASCICULE DE BREVET EUROPEEN**

(45) Date de publication et mention
de la délivrance du brevet:
**04.12.2019 Bulletin 2019/49**

(21) Numéro de dépôt: **15705344.8**

(22) Date de dépôt: **29.01.2015**

(51) Int Cl.:
**H04L 9/00** *(2006.01)*

(86) Numéro de dépôt international:
**PCT/FR2015/050212**

(87) Numéro de publication internationale:
**WO 2015/114264 (06.08.2015 Gazette 2015/31)**

(54) **ÉCHELLE DE MONTGOMERY DÉSÉQUILIBRÉE RÉSISTANTE AUX ATTAQUES PAR CANAUX AUXILIAIRES**

UNAUSGEGLICHENE MONTGOMERY-LEITER GEGEN SETEINKANALANGRIFFE

IMBALANCED MONTGOMERY LADDER FOR RESISTING SIDE-CHANNEL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2014 FR 1400234**

(43) Date de publication de la demande:
**07.12.2016 Bulletin 2016/49**

(73) Titulaire: **Idemia Identity & Security France
92400 Courbevoie (FR)**

(72) Inventeurs:
• **BOULET, Frédéric**
  **F-92130 Issy Les Moulineaux (FR)**
• **SERVANT, Victor**
  **F-92130 Issy Les Moulineaux (FR)**

(74) Mandataire: **Plasseraud IP
66, rue de la Chaussée d'Antin
75440 Paris Cedex 09 (FR)**

(56) Documents cités:
• **JUNFENG FAN ET AL: "An Updated Survey on Secure ECC Implementations: Attacks, Countermeasures and Cost", 1 janvier 2012 (2012-01-01), CRYPTOGRAPHY AND SECURITY: FROM THEORY TO APPLICATIONS, SPRINGER BERLIN HEIDELBERG, BERLIN, HEIDELBERG, PAGE(S) 265 - 282, XP019173515, ISBN: 978-3-642-28367-3 sections 5.1 et 5.2**
• **JUNFENG FAN ET AL: "State-of-the-art of secure ECC implementations: a survey on known side-channel attacks and countermeasures", HARDWARE-ORIENTED SECURITY AND TRUST (HOST), 2010 IEEE INTERNATIONAL SYMPOSIUM ON, IEEE, PISCATAWAY, NJ, USA, 13 juin 2010 (2010-06-13), pages 76-87, XP031710164, ISBN: 978-1-4244-7811-8**
• **GUILLAUME FUMAROLI ET AL: "Blinded Fault Resistant Exponentiation", INTERNATIONAL ASSOCIATION FOR CRYPTOLOGIC RESEARCH,, vol. 20061004:204126, 21 avril 2006 (2006-04-21), pages 1-9, XP061001802,**
• **CIET M ET AL: "(Virtually) Free randomization techniques elliptic curve cryptography", LECTURE NOTES IN COMPUTER SCIENCE/COMPUTATIONAL SCIENCE > (EUROCRYPT )CHES 2008 (LNCS), SPRINGER VERLAG, DE, vol. 2836, 10 octobre 2003 (2003-10-10), pages 348-359, XP007912842, ISBN: 978-3-540-24128-7**

**Description**

L'invention concerne la protection d'un dispositif électronique mettant en œuvre une échelle de Montgomery contre les attaques par canaux cachés.

L'échelle de Montgomery est couramment utilisée en cryptographie. De nombreux algorithmes de chiffrement, de déchiffrement, d'authentification, de vérification d'authentification, de signature électronique ou encore de vérification de signature électronique, s'appuient sur l'échelle de Montgomery.

Un algorithme cryptographique est un algorithme qui vise à protéger une information, en assurant par exemple sa confidentialité, son authenticité, ou son intégrité, grâce aux mathématiques. Un algorithme cryptographique s'appuie souvent sur une ou plusieurs clés, qui peuvent être notamment secrètes, privées, ou publiques. Certains algorithmes cryptographiques n'utilisent pas de clé, c'est le cas notamment de certaines fonctions de hachage (telles que les fonctions SHA-1, MD5, SHA-256, RIPEMD-160, etc.). Parmi les algorithmes cryptographiques on trouve notamment des algorithmes de chiffrement (qui permettent de rendre une information inintelligible) et des algorithmes de déchiffrement (qui permettent de récupérer l'information d'origine à partir d'une information chiffrée), des algorithmes de signature électronique, de vérification de signature, d'authentification, de vérification d'authentification, etc. Parmi les algorithmes cryptographiques s'appuyant sur des clés, certains sont dits symétriques (par exemple les algorithmes DES, 3DES, AES, RC4, HMAC, etc.). Certains algorithmes symétriques sont spécialisés (par exemple l'algorithme HMAC sert pour la signature/vérification de signature mais pas pour le chiffrement/déchiffrement). Les algorithmes symétriques tirent leur nom du fait qu'ils utilisent la même clé (on parle généralement de clé secrète) pour chiffrer et pour déchiffrer, ou encore pour signer et vérifier une signature, etc. Ainsi, les algorithmes cryptographiques symétriques imposent ils à deux parties les utilisant pour sécuriser leurs communications de partager des clés. D'autres algorithmes cryptographiques sont qualifiés d'asymétriques (par exemple les algorithmes DSA, RSA, les courbes elliptiques, etc.) car une clé différente est utilisée par les parties à une communication. Chaque partie dispose d'une clé privée et d'une clé publique associée. Par exemple une partie peut utiliser une de ses clés privées pour signer une information, et c'est une clé publique correspondante qui est utilisée par l'autre partie pour vérifier la signature, ou encore une partie peut utiliser une clé publique appartenant à une autre partie pour chiffrer une information, et l'autre partie peut alors utiliser sa clé privée correspondante pour déchiffrer l'information.

Les algorithmes cryptographiques sont souvent décrits de façon très précise dans des spécifications accessibles à tous, la sécurité d'un algorithme cryptographique n'étant généralement pas liée au caractère secret ou non de son fonctionnement (les algorithmes qui ne sont présumés sûrs qu'en raison de leur caractère secret finissent souvent par être cassés par ingénierie inverse). Les spécifications permettent de déterminer ce qu'un algorithme doit produire en sortie lorsque l'on lui donne une certaine information en entrée. Ceci permet de s'assurer de l'interopérabilité de l'algorithme cryptographique, c'est-à-dire que des implémentations distinctes doivent pouvoir fonctionner entre elles. Par exemple, on peut légitimement s'attendre à ce qu'une information chiffrée par toute implémentation d'un algorithme de chiffrement puisse être déchiffrée par toute implémentation de l'algorithme de déchiffrement correspondant. Cependant, ceci ne signifie pas qu'il n'existe qu'une implémentation possible de chaque algorithme cryptographique. Au contraire, il existe des multitudes d'implémentations possibles pour chaque algorithme cryptographique, de même qu'il existe des multitudes de manières différentes d'effectuer un même calcul. Par exemple, pour calculer $X^2+2X+1$, on peut notamment calculer $X*X$, puis $2*X$, puis ajouter les deux termes puis ajouter 1, ou bien calculer X+1, multiplier le résultat par X, puis ajouter 1, ou encore calculer X+1 et élever le résultat au carré.

On pourrait penser que la sécurité d'un algorithme cryptographique ne dépend que de sa définition mathématique (et des éventuelles clés qui sont utilisées, lorsque ces dernières sont secrètes ou privées), telle qu'elle ressort d'une spécification, et non de la façon exacte dont il calcule le résultat défini dans la spécification. En réalité, il n'en est rien, en général. Il s'avère que la sécurité d'une mise en œuvre particulière d'un algorithme cryptographique ne dépend pas seulement de l'algorithme cryptographique lui-même, mais également de la façon dont il est implémenté, et d'autres facteurs tels que les caractéristiques du dispositif électronique chargé de l'exécuter.

Il est notamment bien connu que lorsqu'un dispositif électronique non protégé exécute un logiciel mettant en œuvre un algorithme cryptographique de manière « naïve » c'est-à-dire d'une manière qui se contente de produire le résultat numérique attendu selon la spécification (tel qu'un résultat de chiffrement) à partir d'une entrée donnée, il est généralement possible d'effectuer une écoute passive du dispositif électronique et d'obtenir des informations critiques sur le déroulement de l'algorithme cryptographique. On est alors en présence d'un canal caché (insoupçonné de l'utilisateur légitime du dispositif électronique) que l'attaquant parvient à espionner. L'écoute passive présente l'avantage d'être non invasive. Le dispositif électronique n'est pas endommagé, et son propriétaire ne se rend pas nécessairement compte qu'il a été attaqué. Ainsi, le dispositif a pu être subtilisé et rendu sans que son propriétaire ne le soupçonne, ou simplement utilisé en l'absence du propriétaire, voire espionné en présence du propriétaire, sans que ce dernier ne le remarque (par exemple par un module dissimulé entre le dispositif électronique et son alimentation électrique). Ainsi, le propriétaire d'un dispositif électronique dont une clé RSA privée à été extraite par un attaquant n'est pas amené à révoquer sa paire de clés RSA (il n'a aucune raison de penser qu'il a été attaqué). L'attaquant peut ensuite utiliser librement la clé RSA privée jusqu'à ce que le propriétaire finisse par se rendre compte que des opérations qu'il n'a pas effectuées (par exemple des transferts de fonds électroniques, ou des signatures électroniques de contrats), lui sont prétendument attribuées, ou qu'un tiers a manifestement eu accès à des informations confidentielles (par exemple un concurrent répondant à plusieurs reprises à de mêmes appels d'offres en étant de très peu le moins disant).

Une écoute passive peut consister par exemple en une analyse du rayonnement électromagnétique émis par le dispositif lors de l'exécution du logiciel (par exemple dans le cadre d'une attaque de type TEMPEST, qui se concentre en général principalement sur la capture d'écrans cathodiques, mais peut être généralisée). En effet, le rayonnement électromagnétique d'un dispositif électronique, par exemple d'un processeur, peut constituer un canal caché qui dépend de ce que ce dispositif est en train d'effectuer, par exemple d'une instruction que le processeur est en train d'exécuter ou d'une donnée que le processeur est en train de manipuler. Il est également possible d'analyser d'autres informations, telles que la consommation électrique instantanée (autre canal caché) d'un dispositif électronique, et de distinguer ainsi les tâches accomplies en fonction de la consommation électrique qu'elles requièrent. On peut aussi mesurer les vibrations émises (certains composants sont susceptibles de vibrer, et ce d'une manière différente selon ce qu'ils font), ou encore les variations de température, etc. (qui constituent autant de canaux cachés potentiels).

Une écoute passive peut également comprendre la mesure d'une durée d'exécution de certaines opérations pour en tirer des conclusions lorsque ces opérations ne sont pas protégées contre les attaques dites « timing attacks ». Par exemple, une opération de vérification de mot de passe non protégée contre les « timing attacks » pourrait comparer les octets d'un mot de passe attendu avec un mot de passe soumis, octet par octet, et retourner une erreur dès qu'un octet est différent. Un attaquant pourrait ainsi, selon le temps que met la fonction de vérification de mot de passe pour répondre que le mot de passe est erroné, déduire que les N premiers octets sont corrects, et refaire une tentative de présentation de mot de passe en ne modifiant que le N+1$^{\text{ème}}$ octet, et ce jusqu'à ce que le temps de réponse ralentisse un peu, ce qui serait le signe que le N+1$^{\text{ème}}$ octet est désormais correct, pour passer au N+2$^{\text{ème}}$ octet, et ainsi de suite jusqu'à obtention du mot de passe complet. Ainsi, pour retrouver un mot de passe de longueur K (en octets), et ce même si le mot de passe est robuste (pas d'attaques par dictionnaire possible), on passe d'une complexité moyenne de $\frac{1}{2}*(2^8)^K$ à une complexité moyenne de $K*2^7$, ce qui est beaucoup plus simple. Afin d'éviter les « timing attacks », il est possible de faire en sorte que toutes les opérations sensibles aient une durée d'exécution constante, ou encore que la durée, bien que variable, ne renseigne pas sur ce qui se déroule durant l'opération.

Une écoute passive élémentaire peut consister simplement à identifier une caractéristique donnée en fonction d'une mesure donnée sur le dispositif électronique ciblé. C'est le cas par exemple des attaques dites SPA (pour Simple Power Analysis). Par exemple, lors d'une exponentiation modulaire effectuée dans une implémentation « naïve » de l'algorithme RSA, la consommation électrique est très différente lorsqu'un bit de l'exposant est égal à 1 (forte consommation) et lorsque ce bit est égal à 0 (consommation plus faible). En effet, dans les implémentations communes, un bit à 1 implique à la fois une opération d'élévation au carré et une opération de multiplication (dite « square and multiply »), alors qu'un bit à 0 n'implique qu'une opération d'élévation au carré. On peut ainsi, en observant la trace de la consommation électrique lors de l'exponentiation modulaire, repérer les séries de 1 et de 0 de l'exposant, qui correspondent à des fluctuations de consommation électrique. Or l'exposant RSA, dans le cas où il s'agit d'un exposant privé, est une donnée extrêmement confidentielle constitutive de la clé privée RSA, qui en général n'est pas censée être connue de quiconque en dehors du dispositif électronique. Obtenir la clé privée de signature d'une personne permet ainsi de signer en son nom, obtenir sa clé privée de déchiffrement permet de déchiffrer ses messages.

Cependant, ces écoutes (simples à mettre en œuvre) ne sont pas toujours efficaces. On connaît des écoutes (attaques) plus élaborées, telles que les attaques dites DPA (pour Differential Power Analysis), dans lesquelles un attaquant exécute un algorithme cryptographique à de multiples reprises, et enregistre à chaque fois les traces produites (par exemple les traces de consommation de courant). Par la suite l'attaquant effectue des calculs statistiques sur la base des multiples enregistrements, et obtient des informations d'une façon plus fiable et plus difficile à empêcher.

Afin de se prémunir contre ces attaques, il est possible de sécuriser le dispositif électronique lui-même. Par exemple, on peut superposer un bruit sur l'alimentation électrique afin de rendre son exploitation plus difficile, lisser la consommation électrique (par exemple avec des condensateurs), limiter les émissions électromagnétiques par des blindages adéquats, etc. On peut aussi utiliser une horloge interne particulière, ayant pour caractéristique d'avoir une fréquence de fonctionnement variable de manière aléatoire, ce qui rend les mesures difficiles à exploiter (les opérations de l'algorithme cryptographique étant alors effectuées à une cadence qui ne cesse de varier, et qui est a priori inconnue de l'attaquant). Il existe également d'autres techniques, consistant par exemple à contrôler l'accès physique et/ou l'accès logique au dispositif électronique. Par exemple, les cartes à puces mettant en œuvre des algorithmes cryptographiques à clé privée protègent généralement les opérations concernées par un code PIN. Ainsi, une personne qui volerait temporairement la carte à puce en espérant en extraire la clé privée puis rendre la carte à son propriétaire sans qu'il ne s'en rende compte, ne pourrait exécuter l'algorithme concerné sans présenter le bon code PIN (qu'un utilisateur averti apprend par cœur et ne communique à personne), et ne serait donc pas en mesure d'effectuer l'attaque.

Ces techniques de contremesure sont utiles, mais généralement insuffisantes à elles seules, car elles ne protègent pas contre tous les scénarios d'attaques. Une autre méthode de protection consiste à utiliser un procédé de sécurisation de l'algorithme cryptographique, consistant à implémenter l'algorithme d'une manière telle que les fluctuations générées (électriques ou autres) dépendent le moins possible du procédé mis en œuvre (et renseignent donc le moins possible sur le procédé).

Par exemple, il est possible de modifier l'implémentation d'un algorithme RSA utilisant une clé privée de façon à ce qu'il effectue des opérations ayant la même signature (électrique, électromagnétique, etc.) lors d'un bit 1 ou lors d'un bit 0 dans l'exposant privé de la clé privée. Par exemple on peut effectuer un « square and multiply » quoi qu'il en soit, le résultat de l'opération de multiplication n'étant utilisé que dans le cas où le bit est à 1. Il faut évidemment être très vigilant, et s'arranger pour que l'implémentation soit aussi symétrique que possible. Par exemple s'il y a un test vérifiant que le résultat de la multiplication doit ou non être utilisé, il faut que ce test se comporte de la même manière quelle que soit son issue (ou d'une moins d'une manière aussi proche que possible), sinon une écoute passive pourrait cibler ce test afin de déterminer s'il s'agissait d'un bit à 0 ou d'un bit à 1.

L'échelle de Montgomery (en anglais, « Montgomery ladder ») est dans ce contexte une technique particulièrement avantageuse.

L'échelle de Montgomery s'applique aux exponentiations (par exemple exponentiation modulaire de l'algorithme RSA - notation multiplicative) et s'applique de la même façon aux multiplications scalaires (par exemple dans le cas des courbes elliptiques - notation additive).

Un bref rappel du fonctionnement de l'échelle de Montgomery est donné ci-après.

Un des buts de l'échelle de Montgomery est de calculer $A^k$ (respectivement k*A) en un temps constant et d'une manière aussi indépendante que possible des paramètres manipulés par l'échelle de Montgomery, A étant un élément d'un groupe abélien muni d'une loi qui est notée multiplicativement (respectivement additivement).

Notons $k_i$ le $i^{\text{ème}}$ bit de k dans sa représentation binaire sur t bits $\left( k = \sum_{i=0}^{t-1} k_i * 2^i \right)$. Soit

$$L_j = \sum_{i=j}^{t-1} k_i * 2^{i-j} \text{ et } H_j = L_j + 1.$$

On a : $L_j = 2*L_{j+1}+k_j = L_{j+1}+H_{j+1}+k_j-1 = 2*H_{j+1}+k_j-2$.

On en déduit : $(L_j, H_j) = \begin{cases} (2*L_{j+1}, L_{j+1} + H_{j+1}) \text{ si } k_j = 0 \\ (L_{j+1} + H_{j+1}, 2*H_{j+1}) \text{ si } k_j = 1 \end{cases}$

Et donc: $(A^{L_j}, A^{H_j}) = \begin{cases} ((A^{L_{j+1}})^2, A^{L_{j+1}} * A^{H_{j+1}}) \text{ si } k_j = 0 \\ (A^{L_{j+1}} * A^{H_{j+1}}, (A^{H_{j+1}})^2) \text{ si } k_j = 1 \end{cases}$

L'échelle de Montgomery s'appuie sur le fait que $L_0=k$.

Elle accepte, en tant que paramètres d'entrée, A et $k = (k_{t-1},...,k_0)_2$.

Elle produit, en sortie, $A^k$ (en notation multiplicative).

Elle se déroule, selon une version élémentaire, de la façon suivante (rédigée en pseudo code) :

$$R_1 \leftarrow 1$$

```
R₂←A

for j=t-1 downto 0 do

    if (kⱼ=0) then

        R₂←R₁R₂

        R₁←(R₁)²

    else

        R₁←R₁R₂

        R₂←(R₂)²

return R₁
```

Une version légèrement améliorée peut tenir compte du fait que le bit de poids fort de k est généralement égal à 1. Dans cette hypothèse, l'échelle de Montgomery peut être simplifiée en :

```
R₁←A

R₂←A²

for j=t-2 downto 0 do

    if (kⱼ=0) then

        R₂←R₁R₂

        R₁←(R₁)²

    else

        R₁←R₁R₂

        R₂←(R₂)²

return R₁
```

Pour illustrer l'interchangeabilité des notations multiplicatives (dans l'exemple ci-dessus, applicable par exemple au RSA, au Diffie-Hellman, etc.) et des notations additives, le même pseudo code peut s'écrire, en notation additive (A représentant par exemple un point d'une courbe elliptique) :

```
R₁←A
```

```
R₂←2*A

for j=t-2 downto 0 do

    if (kⱼ=0) then

        R₂←R₁+R₂

        R₁←2*R₁

    else

        R₁←R₁+R₂

        R₂←2*R₂

return R₁
```

Cependant, l'échelle de Montgomery présentée ci-dessus reste potentiellement sensible à certaines formes d'attaques par canaux cachés.

Un procédé de sécurisation possible consiste à modifier l'échelle de Montgomery ci-dessus en masquant les données sensibles. Il serait ainsi possible de masquer A avec un nombre aléatoire, et/ou de masquer k avec un nombre aléatoire. Cependant, une telle contremesure ralentit très fortement le calcul et l'échelle de Montgomery voit alors son temps d'exécution plus que doubler.

L'invention vient améliorer la situation.

Selon un aspect de l'invention, un procédé de sécurisation d'un dispositif électronique contre des attaques par canaux cachés lorsque le dispositif électronique met en œuvre une échelle de Montgomery pour calculer l'élément $A^{\perp}A^{\perp}...^{\perp}A$ où A apparaît k fois, A étant un élément d'un groupe abélien muni d'une loi $\perp$, et k un entier naturel, comprend une mise en œuvre modifiée de l'échelle de Montgomery comprenant :

/a/ une détermination, par un circuit de détermination du dispositif électronique, d'un premier entier naturel r1 ;

/b/ un calcul, par un circuit de calcul du dispositif électronique, d'un premier paramètre $R1=A^{\perp}A^{\perp}...^{\perp}A$ où A apparaît r1 fois ;

/c/ une détermination, par un circuit de détermination du dispositif électronique, d'un deuxième entier naturel r2 ;

/d/ un calcul, par un circuit de calcul du dispositif électronique, d'un deuxième paramètre $R2=A^{\perp}A^{\perp}...^{\perp}A$ où A apparaît r2 fois ;

/e/ un calcul, par un circuit de calcul du dispositif électronique, d'un entier naturel k' à partir de l'entier naturel k, du premier entier naturel r1 et du deuxième entier naturel r2 ;

/f/ une mise en œuvre, par un circuit de calcul du dispositif électronique, de l'échelle de Montgomery modifiée en utilisant l'entier naturel k' à la place de l'entier naturel k, le premier paramètre $R1=A^{\perp}A^{\perp}...^{\perp}A$ où A apparaît r1 fois à la place d'un paramètre R1=1 et le deuxième paramètre $R2=A^{\perp}A^{\perp}...^{\perp}A$ où A apparaît r2 fois à la place d'un paramètre R2=A.

Ce procédé est avantageux en ce qu'il accroît la sécurité du dispositif électronique vis-à-vis d'attaques par canaux cachés tout en ne dégradant pas les performances (la rapidité de calcul du dispositif électronique) de manière aussi importante que des contremesures de l'état de l'art. Le procédé permet d'obtenir le même résultat que selon l'état de l'art (l'interopérabilité est ainsi assurée), mais calcule ce résultat différemment, de façon beaucoup plus sécurisée.

Un autre aspect de l'invention concerne un dispositif électronique agencé pour se protéger contre des attaques par canaux cachés lorsqu'il met en œuvre une échelle de Montgomery pour calculer l'élément $A^{\perp}A^{\perp}...^{\perp}A$ où A apparaît k fois, A étant un élément d'un groupe abélien muni d'une loi $\perp$, et k un entier naturel.

Le dispositif électronique comprend un circuit de détermination d'un premier entier naturel r1.

Le dispositif électronique comprend un circuit de calcul d'un premier paramètre R1=A$^\perp$A$^\perp$...$^\perp$A où A apparaît r1 fois.

Le dispositif électronique comprend un circuit de détermination d'un deuxième entier naturel r2.

Le dispositif électronique comprend un circuit de calcul d'un deuxième paramètre R2=A$^\perp$A$^\perp$...$^\perp$A où A apparaît r2 fois.

Le dispositif électronique comprend un circuit de calcul d'un entier naturel k' à partir de l'entier naturel k, du premier entier naturel r1 et du deuxième entier naturel r2.

Le dispositif électronique comprend un circuit de calcul de l'échelle de Montgomery modifiée en utilisant l'entier naturel k' à la place de l'entier naturel k, le premier paramètre R1=A$^\perp$A$^\perp$...$^\perp$A où A apparaît r1 fois à la place d'un paramètre R1=1 et le deuxième paramètre R2=A$^\perp$A$^\perp$...$^\perp$A où A apparaît r2 fois à la place d'un paramètre R2=A.

Ce dispositif électronique est avantageux en ce qu'il est plus sécurisé que les dispositifs électroniques non protégés vis-à-vis d'attaques par canaux cachés tout en étant plus performant (plus rapide) que les dispositifs électroniques comportant des contremesures de l'état de l'art comparables en matière de sécurité.

Un aspect de l'invention concerne un programme d'ordinateur comprenant une série d'instructions qui, lorsqu'elles sont exécutées par un processeur, mettent en œuvre le procédé selon l'un des aspects de l'invention.

Un aspect de l'invention concerne un support de stockage non transitoire lisible par ordinateur stockant un programme d'ordinateur selon un aspect de l'invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre un procédé selon un aspect de l'invention ;
- la figure 2 illustre un dispositif électronique selon un aspect de l'invention ainsi qu'un équipement pour tenter de soumettre ce dispositif électronique à une attaque.

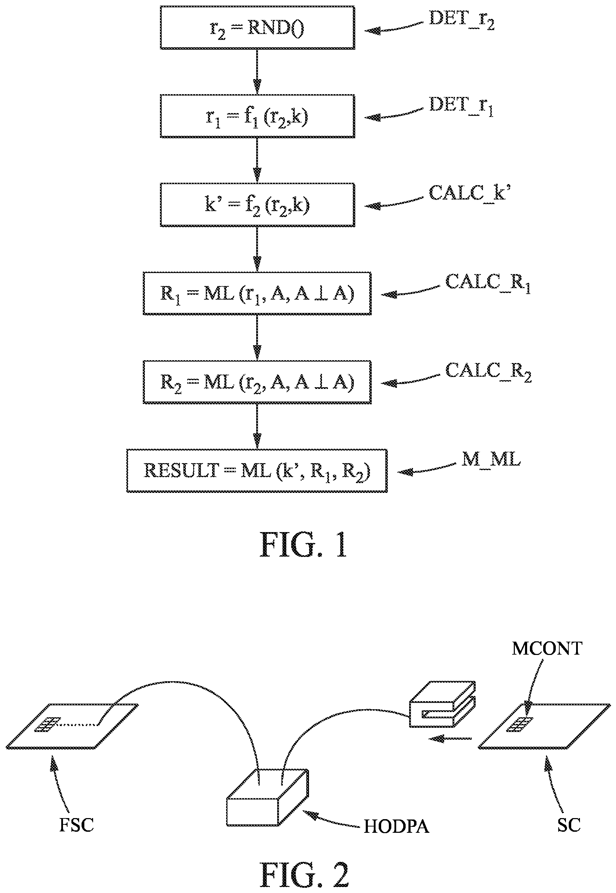

La figure 1 illustre un procédé comprenant les étapes consécutives suivantes afin de calculer de façon sécurisée A$^\perp$A$^\perp$...$^\perp$A où A apparaît k fois, A étant un élément d'un groupe abélien muni d'une loi $\perp$, et k un entier naturel.

Lors d'une étape DET_r2, un dispositif électronique génère aléatoirement un entier r2.

Lors d'une étape DET_r1, le dispositif électronique calcule un entier r1=f1(r2,k).

Lors d'une étape CALC_k', le dispositif électronique calcule un entier k'=f2(r2,k).

Lors d'une étape CALC_R1, le dispositif électronique calcule R1=A$^\perp$A$^\perp$...$^\perp$A où A apparaît r1 fois à l'aide d'une échelle de Montgomery.

Lors d'une étape CALC_R2, le dispositif électronique calcule R2=A$^\perp$A$^\perp$...$^\perp$A où A apparaît r2 fois à l'aide d'une échelle de Montgomery.

Lors d'une étape M_ML, le dispositif électronique calcule A$^\perp$A$^\perp$...$^\perp$A où A apparaît k fois à l'aide d'une échelle de Montgomery, en partant des paramètres R1 et R2 (sans utiliser A directement), et en utilisant l'entier k'.

La figure 2 montre une carte à puce SC (de l'anglais « smart card ») selon l'invention. Une carte à puce est un exemple possible de dispositif électronique pour lequel l'invention est particulièrement avantageuse, compte tenu de ses nombreuses applications dans le domaine de la cryptographie (cartes SIM authentifiant un utilisateur de téléphone portable vis-à-vis d'un opérateur, carte bancaire authentifiant le porteur lors d'une transaction financière, cartes de santé, etc.). La carte à puce SC comprend un microcontrôleur MCONT équipé d'un processeur, et de mémoires RAM, ROM et EEPROM, les mémoires non volatiles (ROM et EEPROM) comprenant des programmes d'ordinateur aptes à faire fonctionner la carte à puce.

La figure 2 montre également une fausse carte à puce FSC (« fake smart card » en anglais), qui n'est en fait qu'une connectique ayant la forme d'une carte à puce et ayant des contacts électriques aux positions normalisées, ces contacts étant connectés aux contacts correspondants d'une véritable carte à puce SC selon une mise en œuvre possible de l'invention via un équipement HODPA permettant une attaque de type HODPA si la carte à puce n'est pas convenablement protégée. L'équipement HODPA se branche ainsi en série entre la véritable carte à puce SC prise pour cible par un attaquant, et une fausse carte FSC réalisant l'interface physique entre un terminal censé accueillir la véritable carte à puce SC et cette véritable carte à puce SC. Le but de la fausse carte à puce FSC est dans cet exemple de pouvoir espionner une consommation de courant de la carte à puce SC sans avoir à modifier le terminal utilisant la carte (et en particulier le lecteur de carte à puce). Selon l'invention, la carte à puce SC est plus résistante aux attaques de ce type et il est très difficile pour l'équipement HODPA d'extraire les informations ciblées de la carte à puce SC.

Un premier mode de réalisation concerne un procédé de sécurisation d'un dispositif électronique SC (tel qu'une carte à puce) contre des attaques par canaux cachés. L'invention s'applique à tout autre dispositif portable, tel qu'un passeport électronique, un visa électronique, un permis de conduire électronique, une clé USB sécurisée, une carte secure MMC, un jeton sécurisé (token), etc. L'invention peut également être mise en œuvre dans un ordinateur personnel, un serveur, un accélérateur SSL, etc. La majorité des ordinateurs personnels est non sécurisée, en comparaison avec un dispositif sécurisé tel qu'une carte à puce. Ceci rend ces ordinateurs vulnérables à des attaques beaucoup plus simples à mettre en œuvre que les attaques contre lesquelles l'invention permet de se protéger, telles que des attaques purement logicielles. Ces attaques logicielles (par virus, chevaux de Troie, etc.) peuvent souvent être menées à bien à distance sans nécessiter aucun accès physique.

Il pourrait sembler saugrenu de chercher à se protéger contre des attaques complexes et contraignantes de type écoutes passives alors qu'un attaquant situé sur un autre continent pourrait prendre le contrôle de l'ordinateur à distance et extraire des informations critiques de manière bien plus simple et bien moins dangereuse pour lui (pas d'intrusion, pas de vol de dispositif, etc.). Cependant certains ordinateurs personnels (par exemple dans des environnements militaires) sont fortement sécurisés contre les attaques purement logicielles, et dans ce contexte les protéger également contre des attaques par écoutes passives est avantageux.

Plus précisément, le procédé de sécurisation protège le dispositif électronique lorsqu'il met en œuvre une échelle de Montgomery pour calculer l'élément $A \perp A \perp ... \perp A$ où A apparaît k fois, A étant un élément d'un groupe abélien muni d'une loi $\perp$, et k un entier naturel.

Si la loi $\perp$ est multiplicative (cas notamment de l'algorithme RSA), l'élément $A \perp A \perp ... \perp A$ où A apparaît k fois peut se noter $A^k$, et si elle est additive (cas notamment des algorithmes ECC), il peut se noter $k*A$.

Selon une mise en œuvre possible, A représente une donnée en clair (par exemple une portion d'email, une portion de document, etc.) que l'on cherche à chiffrer. Cette donnée peut en réalité avoir subi un prétraitement qui la rend non intelligible pour un être humain. Selon une mise en œuvre possible, ce prétraitement comprend (ou consiste en) un encodage requis pour représenter les informations (par exemple la représentation binaire d'une photo, même non compressée, n'est pas immédiatement intelligible par un humain). Selon une mise en œuvre possible, ce prétraitement comprend l'application d'un schéma de remplissage PKCS#1 / OAEP. Selon une mise en œuvre possible, ce prétraitement comprend un premier niveau de chiffrement (par exemple un chiffrement par clé de session symétrique avant chiffrement par clé publique). L'élément $A \perp A \perp ... \perp A$ où A apparaît k fois représente alors l'information chiffrée correspondant à l'information en clair. Selon une mise en œuvre possible, le dispositif électronique applique des traitements ultérieurs sur l'élément $A \perp A \perp ... \perp A$ où A apparaît k fois afin d'obtenir l'information chiffrée.

Le procédé comprend une mise en œuvre modifiée de l'échelle de Montgomery.

Le procédé comprend notamment une détermination DET_r1, par un circuit de détermination du dispositif électronique SC, d'un premier entier naturel r1. Ce premier entier naturel peut être par exemple tiré aléatoirement (par un générateur de nombres pseudo aléatoires, le générateur pouvant être logiciel, matériel ou mixte). Les cartes à puces comprennent de manière usuelle un générateur de nombres pseudo aléatoires s'appuyant sur un composant matériel. Un tel composant matériel exploite par exemple une mesure de bruit dans le composant à l'aide d'un convertisseur analogique numérique. Selon une mise en œuvre possible, r1 est choisi de façon à être non nul.

Le procédé comprend un calcul CALC_R1, par un circuit de calcul du dispositif électronique SC, d'un premier paramètre $R1 = A \perp A \perp ... \perp A$ où A apparaît r1 fois. Par exemple, si la loi $\perp$ est multiplicative (cas notamment de l'algorithme RSA), $R1 = A^{r1}$, et si elle est additive (cas notamment des algorithmes ECC), $R1 = r1*A$. Il est entendu, dans l'hypothèse où r1 serait nul, que R1 = 1 si la loi $\perp$ est multiplicative et R1 = 0 si la loi $\perp$ est additive.

Le procédé comprend une détermination DET_r2, par un circuit de détermination du dispositif électronique SC, d'un deuxième entier naturel r2. Ce deuxième entier naturel peut être par exemple tiré aléatoirement (par un générateur de nombres pseudo aléatoires, le générateur pouvant être logiciel, matériel ou mixte).

Le procédé comprend un calcul CALC_R2, par un circuit de calcul du dispositif électronique SC, d'un deuxième paramètre $R2 = A \perp A \perp ... \perp A$ où A apparaît r2 fois. Par exemple, si la loi $\perp$ est multiplicative (cas notamment de l'algorithme RSA), $R2 = A^{r2}$, et si elle est additive (cas notamment des algorithmes ECC), $R2 = r2*A$. Il est entendu, dans l'hypothèse où r2 serait nul, que R2 = 1 si la loi $\perp$ est multiplicative et R2 = 0 si la loi $\perp$ est additive.

Dans le cas général, r1 et r2 peuvent être quelconques tant qu'ils sont non nuls et distincts. Mais dans certaines mises en œuvre envisagées plus loin, on impose certaines conditions à r1 et/ou r2 (être impair, ne pas être un multiple de certaines valeurs, etc.). Les entiers r1 et r2 peuvent être par exemple des entiers de 32 bits.

Le procédé comprend un calcul CALC_k', par un circuit de calcul du dispositif électronique SC, d'un entier naturel k' à partir de l'entier naturel k, du premier entier naturel r1 et du deuxième entier naturel r2. Cet entier naturel k' est un paramètre modifié de l'échelle de Montgomery. Par exemple, en notation multiplicative, k' désigne un exposant remplaçant l'exposant k fourni en entrée.

Selon un mode de réalisation possible, k' est la division de $k - 2^{n'}.r1$ par la quantité r2 - r1, cette division pouvant être euclidienne ou modulo le paramètre N (qui est le cardinal du groupe abélien), n' étant un entier positif. Selon un mode de réalisation possible, dans le cas d'une division euclidienne (selon la phrase précédente) qui ne serait pas entière, le procédé applique un calcul correctif (tel que le calcul correctif envisagé dans le troisième mode de réalisation ci-dessous).

Le procédé comprend enfin une mise en œuvre M_ML (échelle de Montgomery modifiée), par un circuit de calcul du dispositif électronique SC, de l'échelle de Montgomery modifiée en utilisant l'entier naturel k' à la place de l'entier naturel k, le premier paramètre R1=A$^\perp$A$^\perp$...$^\perp$A où A apparaît r1 fois à la place d'un paramètre R1=1 et le deuxième paramètre R2=A$^\perp$A$^\perp$...$^\perp$A où A apparaît r2 fois à la place d'un paramètre R2=A. Le procédé comprend donc en réalité la mise en œuvre d'une échelle de Montgomery selon l'état de l'art, mais dans laquelle les paramètres d'entrée sont changés.

Ainsi, au lieu de mettre en œuvre les étapes suivantes (en pseudo code) :

$$R_1 \leftarrow A$$

$$R_2 \leftarrow A \perp A$$

```
for j=t-2 downto 0 do
        if (k_j=0) then
```

$$R_2 \leftarrow R_1 \perp R_2$$

$$R_1 \leftarrow R_1 \perp R_1$$

```
        else
```

$$R_1 \leftarrow R_1 \perp R_2$$

$$R_2 \leftarrow R_2 \perp R_2$$

```
        return R_1
```

le procédé met en œuvre, par exemple, les étapes suivantes :

```
r₁←random

r₂←random

k'=f(r₁,r₂,k)

R₁←A⊥A⊥...A (r₁ fois)

R₂←A⊥A⊥...A (r₂ fois)

for j=t'-2 downto 0 do

     if (k'ⱼ=0) then

        R₂←R₁⊥R₂

        R₁←R₁⊥R₁

     else

        R₁←R₁⊥R₂

        R₂←R₂⊥R₂

return R₁
```

k est stocké sur t bits, et k' est stocké sur t' bits.

Selon une mise en œuvre possible, les entiers r1 et r2 sont choisis de façon à être beaucoup plus courts que l'entier k. Selon une mise en œuvre possible, r1 et r2 ont la même longueur (sont codés sur le même nombre de bits). En RSA, k peut être codé par exemple sur 1024, 2048 ou 4096 bits (plus particulièrement dans le cas d'un déchiffrement, d'une signature ou d'une authentification et plus généralement dans le cas de l'utilisation de la clé privée, par opposition à la clé publique), alors que r1 et r2 peuvent être codés par exemple sur 16, 32, 64 ou 128 bits. Il ne s'agit là que d'exemples possibles.

Selon un deuxième mode de réalisation, dans un procédé de sécurisation selon le premier mode de réalisation, un circuit de calcul dispositif électronique mettant en œuvre le calcul CALC_R1 du premier paramètre et un circuit de calcul dispositif électronique mettant en œuvre le calcul CALC_R2 du deuxième paramètre mettent en œuvre ces deux calculs avec une échelle de Montgomery. Les calculs de $A^{r1}$ et $A^{r2}$ (en notation multiplicative, mais il en est de même pour r1*A et r2*A en notation additive et pour toute autre notation) peuvent ainsi être eux-mêmes protégés par une échelle de Montgomery. Selon une mise en œuvre possible, il s'agit là d'une échelle de Montgomery de l'état de l'art. Mais selon une variante possible, l'échelle de Montgomery modifiée selon l'invention est utilisée de façon récursive. Par exemple, à chaque fois que $A^k$ doit être calculé, le procédé détermine la longueur de r1 et r2 comme étant la longueur de k divisée par un entier déterminé (par exemple 8, 16, ou 32) et si la longueur de r1 (respectivement r2) s'avère inférieure à un seuil pour lequel le procédé ne présente plus d'intérêt (par exemple il semble inutile de descendre en dessous de 8 bits de longueur pour r1 ou r2), alors le procédé met en œuvre une échelle de Montgomery conventionnelle. A titre d'illustration, pour un calcul avec k=4096 ($A^k$ en notation multiplicative), le procédé génère (selon une mise en œuvre possible) r1 et r2 de 512 bits, puis pour effectuer le calcul de $A^{r1}$ (et de même pour $A^{r2}$), il génère par récursivité un r1bis et un r2bis de 64 bits, puis pour calculer $A^{r1bis}$ (et de même pour $A^{2bis}$) il génère des r1ter / r2ter de 8 bits, et l'on a ainsi une récursivité à trois niveaux.

Selon un troisième mode de réalisation, un procédé de sécurisation selon le premier ou le deuxième mode de réalisation comprend un calcul, par le dispositif électronique SC, d'un terme correctif.

En effet, dans certains cas, il arrive qu'il ne soit pas possible de déterminer un entier k' approprié, et plutôt que de recalculer un nouveau r1 et/ou un nouveau r2, il est possible de déterminer le k' le plus proche satisfaisant puis de calculer un terme correctif permettant de trouver le bon résultat.

Le procédé comprend ainsi l'utilisation, par un circuit de correction du dispositif électronique SC, du terme correctif afin de corriger le résultat de la mise en œuvre modifiée de l'échelle de Montgomery et d'obtenir ainsi la valeur de l'élément $A^{\perp}A...^{\perp}A$ où A apparaît k fois.

Un quatrième mode de réalisation se rapporte à un dispositif électronique SC agencé pour se protéger contre des attaques par canaux cachés lorsqu'il met en œuvre une échelle de Montgomery pour calculer l'élément $A^{\perp}A^{\perp}...^{\perp}A$ où A apparaît k fois, A étant un élément d'un groupe abélien muni d'une loi $\perp$, et k un entier naturel.

Ce dispositif électronique est agencé pour mettre en œuvre un procédé selon l'un des premier au troisième modes de réalisation. Toute mise en œuvre décrite en relation avec l'un quelconque des procédés selon l'invention se transpose au dispositif électronique correspondant, et réciproquement.

Le dispositif électronique SC comprend un circuit de détermination MCONT d'un premier entier naturel r1.

Le dispositif électronique SC comprend un circuit de calcul MCONT d'un premier paramètre $R1=A^{\perp}A^{\perp}...^{\perp}A$ où A apparaît r1 fois.

Le dispositif électronique SC comprend un circuit de détermination MCONT d'un deuxième entier naturel r2.

Le dispositif électronique SC comprend un circuit de calcul MCONT d'un deuxième paramètre $R2=A^{\perp}A^{\perp}...^{\perp}A$ où A apparaît r2 fois.

Le dispositif électronique SC comprend un circuit de calcul MCONT d'un entier naturel k' à partir de l'entier naturel k, du premier entier naturel r1 et du deuxième entier naturel r2.

Le dispositif électronique SC comprend un circuit de calcul MCONT de l'échelle de Montgomery modifiée en utilisant l'entier naturel k' à la place de l'entier naturel k, le premier paramètre $R1=A^{\perp}A^{\perp}...^{\perp}A$ où A apparaît r1 fois à la place d'un paramètre R1=1 et le deuxième paramètre $R2=A^{\perp}A^{\perp}...^{\perp}A$ où A apparaît r2 fois à la place d'un paramètre R2=A.

Les circuits de détermination et les circuits de calcul précités peuvent être distincts ou peuvent être intégrés au sein d'un même circuit MCONT tel qu'un microcontrôleur. Chacun de ces circuits peut ainsi être constitué d'un microprocesseur (éventuellement commun à tous ces circuits) associé à une mémoire stockant un programme d'ordinateur adapté pour faire exécuter au microprocesseur les fonctions du circuit considéré. Alternativement, chacun de ces circuits peut être un circuit électronique dédié (FPGA, ASIC, PAL, etc.). Alternativement, certains circuits peuvent être des circuits électroniques dédiés et d'autres peuvent s'appuyer sur un microprocesseur mettant en œuvre un programme d'ordinateur adapté. Toutes les combinaisons sont possibles.

Selon un cinquième mode de réalisation, un circuit de calcul du premier paramètre et un circuit de calcul du deuxième paramètre (il peut s'agir de deux circuits distincts ou d'un seul et même circuit) d'un dispositif électronique SC selon le quatrième mode de réalisation sont agencés pour mettre en œuvre ces deux calculs avec une échelle de Montgomery.

Selon un sixième mode de réalisation, un dispositif électronique SC selon le quatrième ou le cinquième mode de réalisation comprend un circuit de calcul MCONT d'un terme correctif et un circuit de correction MCONT agencé pour utiliser le terme correctif afin de corriger le résultat du circuit de calcul de l'échelle de Montgomery modifiée et d'obtenir ainsi la valeur de l'élément $A^{\perp}A...^{\perp}A$ où A apparaît k fois.

Le circuit de calcul et le circuit de correction précités peuvent être distincts ou peuvent être intégrés au sein d'un même circuit MCONT tel qu'un microcontrôleur. Chacun de ces circuits peut ainsi être constitué d'un microprocesseur (éventuellement commun à ces circuits) associé à une mémoire stockant un programme d'ordinateur adapté pour faire exécuter au microprocesseur les fonctions du circuit considéré. Alternativement, chacun de ces circuits peut être un circuit électronique dédié (FPGA, ASIC, PAL, etc.). Alternativement, certains circuits peuvent être des circuits électroniques dédiés et d'autres peuvent s'appuyer sur un microprocesseur mettant en œuvre un programme d'ordinateur adapté. Toutes les combinaisons sont possibles.

Un septième mode de réalisation concerne un programme d'ordinateur comprenant une série d'instructions qui, lorsqu'elles sont exécutées par un processeur, mettent en œuvre un procédé selon l'un des modes de réalisation de l'invention. Le programme d'ordinateur peut être écrit notamment en assembleur, en langage C, ou en tout autre langage approprié. Le programme d'ordinateur est selon une mise en œuvre possible mis en œuvre au niveau du système d'exploitation du dispositif électronique (par exemple d'une carte à puce), et il est écrit dans un langage de bas niveau tel que l'un des deux exemples précités (assembleur ou langage C), par opposition à un langage de plus haut niveau tel que javacard.

Un huitième mode de réalisation concerne un support de stockage non transitoire lisible par ordinateur stockant un programme d'ordinateur selon l'un des modes de réalisation. Ce support de stockage peut être notamment une mémoire EEPROM, Flash, ROM ou RAM sauvegardée par batterie, voire une mémoire magnétique ou une mémoire optique. Ce support de stockage peut également consister en un dispositif (clé USB, carte mémoire telle que carte SD, microSD, etc.) comprenant une mémoire selon la phrase précédente.

Un procédé possible, appliqué aux courbes elliptiques, comprend les étapes suivantes.

Le procédé commence par générer aléatoirement l'entier r2.

Le procédé calcule alors r1 de manière déterministe en fonction de r2 et de k à l'aide d'une fonction f1 (r1=f1(r2, k)).

Le procédé calcule ensuite k'=f2(r2, k) de manière similaire mais avec une autre fonction f2.

Le procédé effectue alors trois appels à une fonction mettant en œuvre l'échelle de Montgomery conventionnelle (notée ML), avec des paramètres appropriés :

R1 = ML(r1, A, 2.A) (ce qui produit un résultat R1 égal à r1*A)
R2 = ML(r2, A, 2.A) (ce qui produit un résultat R2 égal à r2*A)
Résultat = ML(k', R1, R2) (ce qui produit un résultat égal à k*A)

Selon une variante possible, on choisit :

$$k' = (k - 2^{n'}.r1)/(r2 - r1)$$

On a alors, en notation multiplicative :

$$A^k = ML(k', A^{r1}, A^{r2}) * A^{(k - (2^{n'})*r1) \bmod (r2 - r1)}$$

La partie $A^{(k-(2^{n'})*r1) \bmod (r2-r1)}$ représente le terme correctif.

Aucun terme correctif n'est nécessaire si l'on s'arrange pour que la division effectuée pour le calcul de k' n'ait pas de reste, c'est-à-dire pour que k soit égal à k'*(r2-r1)+$2^{n'}$*r1.

Cette variante a un coût (durée d'exécution) proportionnel à la longueur de l'exposant k plus la longueur des exposants r1 et r2 (soit la longueur de k plus deux fois la longueur de r1 si r1 et r2 ont même longueur, par exemple 32 bits chacun). On parle d'exposants par abus de langage (il ne s'agit d'exposants qu'en notation multiplicative).

Selon une variante dite modulaire, k'=(k-$2^{n'}$*r1)*(r2-r1)$^{-1}$ mod N, r1 et r2 étant choisis aléatoirement parmi les entiers impairs.

Il n'y a alors pas besoin de terme correctif (on a directement $A^k = ML(k', A^{r1}, A^{r2})$).

Pour une courbe elliptique, le nombre d'opérations requises est proportionnel à la taille de l'ordre de la courbe elliptique plus deux fois la longueur de l'exposant r1 (r1 et r2 ont la même longueur).

Selon une variante arithmétique possible (qui est particulièrement efficace en raison de son nombre d'itérations réduit au minimum), le procédé fixe la valeur de r1 de façon à ce que r2-r1 divise k-$2^{n'}$*r1, pour supprimer le terme correctif.

On peut résoudre ce problème en partant de $A^{r1}$ et $N^{r2+r1}$ (au lieu de $A^{r1}$ et $A^{r2}$), c'est-à-dire en changeant de notation, en utilisant r2+r1 au lieu de r2 pour le deuxième exposant.

On cherche ainsi : k = ($2^{n'}$ - k')*r1 + (r2 + r1)*k',
qui se simplifie en : k = $2^{n'}$*r1 + r2*k'

On cherche donc r1 tel que (k - $2^{n'}$*r1) mod r2 = 0.

Avec n' entier positif et r2 aléatoire mais impair, on a r1 = (k*$2^{-n'}$ mod r2), et k' = (k - $2^{n'}$*r1)/r2

Dans cette hypothèse, aucun terme correctif n'est requis (on a directement $A^k = ML(k', A^{r1}, A^{r2})$), et les calculs sont plus courts, puisqu'il n'y a besoin que d'un nombre d'opérations proportionnel à la longueur de k plus la longueur de r1.

Une variante arithmétique avec r2=1 ne protège pas bien contre les attaques car seule une petite partie de k est masquée. Une telle version n'est donc généralement pas recommandée.

Une variante modulaire avec r1=1 et avec r2 aléatoire mais impair consiste à prendre k'=(k-$2^{n'}$)*r2$^{-1}$ mod N

Pour une courbe elliptique, le nombre d'opérations requises est proportionnel à la taille de l'ordre de la courbe elliptique plus la longueur de l'exposant r2.

Une variante modulaire avec r2=1 évite une inversion modulaire.

L'entier r1 est un nombre aléatoire impair.

On définit k' = k - $2^{n'}$*r1 mod N

Pour une courbe elliptique, le nombre d'opérations requises est proportionnel à la taille de l'ordre de la courbe elliptique plus la longueur de l'exposant r1.

Il n'existe pas de conditions particulières pour le cas du RSA, si ce n'est des conditions d'inversibilité modulo (p-1)(q-1).

En revanche, pour le cas ECC (courbes elliptiques) il faut (le cas échéant) faire attention à ne pas tomber sur le point à l'infini pendant les calculs. Quelques conditions permettent de s'assurer que ça ne sera pas le cas. Par exemple, pour la variante arithmétique avec r1 fixé (exposée ci-dessus), le procédé peut opérer de la façon suivante.

On cherche r1, r2, k' et n' entiers positifs tels que (s1*k mod N) = $2^{n'}$*r1 + s2*r2*k, où s1 et s2 valent +1 ou -1.

On a ainsi : k' = (s2*(s1*k mod N))*r2$^{-1}$ mod $2^{n'}$.

Et : r1 = ((s1*k mod N) - s2*r2*k') / ($2^{n'}$).

Les contraintes suivantes peuvent ainsi être définies :

- Pour que r2$^{-1}$ existe imposer à r2 d'être impair.
- Pour que l'entropie de r2 soit constante forcer son poids fort à 1 (les poids fort à 0 sont susceptibles d'être visibles).
- Pour ne pas donner d'information sur k, imposer à n' d'en être indépendant.
- Pour des raisons de performance imposer à n' d'être aussi petit que possible.
- Pour éviter le point à l'infini imposer que r1 et r2 soient distincts et non nuls et que, pour tout i dans l'intervalle [0..n'] :

$$0 \neq (2^{i}*r1 + s2*r2*(k' \bmod 2^{i}) \bmod N)$$

et

$$0 \neq (2^{i}*r1 + s2*r2*((k' \bmod 2^{i}) + 1) \bmod N)$$

Il est possible de choisir initialement s1 de la manière suivante.

Si k est multiple $2^{x}$ alors k' sera aussi multiple de $2^{x}$.

Pour éviter de tels k, dans un premier temps il est possible de choisir s1=2*(k mod 2) - 1.

Le choix de la taille et de la valeur de r2 peut être opéré de la façon suivante. Dans le cas des courbes elliptiques, pour que le point à l'infini n'apparaisse pas pendant les calculs il suffit de considérer le dernier tour seulement.

On peut exiger $0 \neq (2^{n'}*r1 + s2*r2*(k' + 1) \bmod N)$.

Ceci équivaut à dire que $0 \neq (s1*k + s2*r2 \bmod N)$.

Or ceci est toujours vrai si r2 $\neq$ k et r2 $\neq$ N-k. Or r2 est impair et N est premier donc impair. Seul un parmi k et N-k est donc impair. Il suffit donc de forcer un bit de r2 au complément du même bit de l'élément impair.

On choisit par exemple $2^{32} > r2 > 2^{31}$ pour disposer d'un minimum de 29 bits d'entropie.

Pour que r1 soit non nul il ne faut pas que r2 divise (s1*k mod N). Si 0=(s1*k mod N) mod r2 alors s1 = -s1.

Pour que n' soit minimal tout en étant indépendant de k le procédé peut le choisir tel que: $N > 2^{n'}*r2 > N/2$.

Le procédé peut choisir s2 pour que r1 soit positif et d'une taille similaire à celle de r2 : s2=(k-2$^{n'}$*r2)/|k-2$^{n'}$*r2| (c'est-à-dire que s2 est le signe de k-2$^{n'}$*r2).

Bien entendu, la présente invention ne se limite pas à la forme de réalisation décrite ci-avant à titre d'exemple ; elle s'étend à d'autres variantes.

Ainsi, il a été décrit ci-avant un procédé pour sécuriser une étape de chiffrement RSA (ou ECC), mais il est possible de sécuriser de la même façon une étape de déchiffrement RSA (ou ECC), d'authentification RSA (ou ECC), de vérification d'authentification RSA (ou ECC), de signature RSA (ou ECC), de vérification de signature RSA (ou ECC), et plus généralement une telle étape (chiffrement, déchiffrement, authentification, vérification d'authentification, signature, vérification de signature, échange de clés, etc.) mise en œuvre par des algorithmes autres que RSA et ECC (par exemple Diffie-Hellman, etc.).

De plus, le procédé selon l'invention n'est pas exclusif de l'utilisation d'autres procédés. Par exemple il est possible de combiner le procédé selon l'invention avec d'autres contremesures.

**Revendications**

1. Procédé de sécurisation d'un dispositif électronique (SC) contre des attaques par canaux cachés lorsque le dispositif électronique (SC) met en œuvre une échelle de Montgomery pour calculer l'élément A$\perp$A$\perp$...$\perp$A où A apparaît k fois, A étant un élément d'un groupe abélien muni d'une loi $\perp$, et k un entier naturel, le procédé comprenant une mise en œuvre modifiée de l'échelle de Montgomery comprenant :

   /a/ une détermination (DET_r1), par un circuit de détermination du dispositif électronique (SC), d'un premier entier naturel r1 ;
   /b/ un calcul (CALC_R1), par un circuit de calcul du dispositif électronique (SC), d'un premier paramètre R1=A$\perp$A$\perp$...$\perp$A où A apparaît r1 fois ;
   /c/ une détermination (DET_r2), par un circuit de détermination du dispositif électronique (SC), d'un deuxième entier naturel r2, r2 et r1 étant non-nuls et distincts ;
   /d/ un calcul (CALC_R2), par un circuit de calcul du dispositif électronique (SC), d'un deuxième paramètre R2=A$\perp$A$\perp$...$\perp$A où A apparaît r2 fois ;
   /e/ un calcul (CALC_k'), par un circuit de calcul du dispositif électronique (SC), d'un entier naturel k' à partir de l'entier naturel k, du premier entier naturel r1 et du deuxième entier naturel r2 ; k' étant la division de k-2$^{n'}$.r1 par la quantité r2-r1, où n' est un entier positif et N le cardinal du groupe abélien,

/f/ une mise en œuvre (M_ML), par un circuit de calcul du dispositif électronique (SC), de l'échelle de Montgomery, modifiée en utilisant l'entier naturel k' à la place de l'entier naturel k, le premier paramètre $R1 = A \perp A \perp ... \perp A$ où A apparaît r1 fois à la place d'un paramètre R1=1 et le deuxième paramètre $R2 = A \perp A \perp ... \perp A$ où A apparaît r2 fois à la place d'un paramètre R2=A.

2. Procédé de sécurisation selon la revendication 1, un circuit de calcul du dispositif électronique mettant en œuvre le calcul (CALC_R1) du premier paramètre et un circuit de calcul du dispositif électronique mettant en œuvre le calcul (CALC_R2) du deuxième paramètre mettant en œuvre ces deux calculs respectifs avec une échelle de Montgomery.

3. Procédé de sécurisation selon la revendication 1 ou 2, comprenant :

/g/ un calcul, par le dispositif électronique (SC), d'un terme correctif ;

/h/ l'utilisation, par un circuit de correction du dispositif électronique (SC), du terme correctif afin de corriger le résultat de la mise en œuvre modifiée de l'échelle de Montgomery et d'obtenir ainsi la valeur de l'élément $A \perp A \perp ... \perp A$ où A apparaît k fois.

4. Dispositif électronique (SC) agencé pour se protéger contre des attaques par canaux cachés lorsqu'il met en œuvre une échelle de Montgomery pour calculer l'élément $A \perp A \perp ... \perp A$ où A apparaît k fois, A étant un élément d'un groupe abélien muni d'une loi $\perp$, et k un entier naturel, le dispositif électronique (SC) comprenant :

un circuit de détermination (MCONT) d'un premier entier naturel r1 ;
un circuit de calcul (MCONT) d'un premier paramètre $R1 = A \perp A \perp ... \perp A$ où A apparaît r1 fois ;
un circuit de détermination (MCONT) d'un deuxième entier naturel r2, r2 et r1 étant non-nuls et distincts ;
un circuit de calcul (MCONT) d'un deuxième paramètre $R2 = A \perp A \perp ... \perp A$ où A apparaît r2 fois ;
un circuit de calcul (MCONT) d'un entier naturel k' à partir de l'entier naturel k, du premier entier naturel r1 et du deuxième entier naturel r2, k' étant la division de $k - 2^{n'} \cdot r1$ par la quantité r2-r1, où n' est un entier positif et N le cardinal du groupe abélien ;
un circuit de calcul (MCONT) de l'échelle de Montgomery, modifiée en utilisant l'entier naturel k' à la place de l'entier naturel k, le premier paramètre $R1 = A \perp A \perp ... \perp A$ où A apparaît r1 fois à la place d'un paramètre R1=1 et le deuxième paramètre $R2 = A \perp A \perp ... \perp A$ où A apparaît r2 fois à la place d'un paramètre R2=A.

5. Dispositif électronique (SC) selon la revendication 4, un circuit de calcul du premier paramètre et un circuit de calcul du deuxième paramètre étant agencés pour mettre respectivement en œuvre ces deux calculs avec une échelle de Montgomery.

6. Dispositif électronique (SC) selon la revendication 4 ou 5, comprenant :

un circuit de calcul (MCONT) d'un terme correctif ;
un circuit de correction (MCONT) agencé pour utiliser le terme correctif afin de corriger le résultat du circuit de calcul de l'échelle de Montgomery modifiée et d'obtenir ainsi la valeur de l'élément $A \perp A \perp ... \perp A$ où A apparaît k fois.

7. Programme d'ordinateur comprenant une série d'instructions qui, lorsqu'elles sont exécutées par un processeur, mettent en œuvre le procédé selon l'une des revendications 1 à 3.

8. Support de stockage non transitoire lisible par ordinateur stockant un programme d'ordinateur selon la revendication 7.

**Patentansprüche**

1. Verfahren zum Sichern einer elektronischen Vorrichtung (SC) gegen verdeckte Kanalangriffe, wenn die elektronische Vorrichtung (SC) eine Montgomery-Skala umsetzt, um das Element $A \perp A \perp A ... \perp A$ zu berechnen, in dem A k-mal auftritt, wobei A ein Element einer mit einem Gesetz $\perp$, versehenen abelschen Gruppe ist und k eine natürliche Zahl, wobei das Verfahren eine modifizierte Umsetzung der Montgomery-Skala aufweist, die Folgendes aufweist:

/a/ eine Bestimmung (DET_r1) einer ersten natürlichen Zahl r1 durch eine Schaltung zum Bestimmen der elektronischen Vorrichtung (SC);

/b/ eine Berechnung (CALC_R1) eines ersten Parameters R1= $A^\perp A^\perp...^\perp A$, in dem A rl-mal auftritt, durch eine Schaltung zum Berechnen der elektronischen Vorrichtung (SC) ;

/c/ eine Bestimmung (DET_r2) einer zweiten natürlichen Zahl r2 durch eine Schaltung zum Bestimmen der elektronischen Vorrichtung (SC), wobei r2 und r1 nicht Null und unterschiedlich sind;

/d/ eine Berechnung (CALC_R2) eines zweiten Parameters R2 = $A^\perp A^\perp...^\perp A$, in dem A r2-mal auftritt, durch eine Schaltung zum Berechnen der elektronischen Vorrichtung (SC) ;

/e/ eine Berechnung (CALC_k') einer natürlichen Zahl k' aus der natürlichen Zahl k, der ersten natürlichen Zahl r1 und der zweiten natürlichen Zahl r2 durch eine Schaltung zum Berechnen der elektronischen Vorrichtung (SC); wobei k' die Division von $k-2^{n'}.r1$ durch die Menge r2-rl ist, in der n' eine positive Ganzzahl und N die Elementanzahl der abelschen Gruppe ist;

/f/ eine Umsetzung (M_ML) der Montgomery-Skala, die unter Verwendung der natürlichen Zahl k' anstelle der natürlichen Zahl k, des ersten Parameters R1= $A^\perp A^\perp...^\perp A$, in dem A rl-mal auftritt, anstelle eines Parameters R1= 1 und des zweiten Parameters R2 = $A^\perp A^\perp...^\perp A$, in dem A r2-mal auftritt, anstelle eines Parameters R2 = A modifiziert wurde, durch eine Schaltung zum Berechnen der elektronischen Vorrichtung (SC) .

2. Verfahren zum Sichern nach Anspruch 1, wobei eine Schaltung zum Berechnen der elektronischen Vorrichtung die Berechnung (CALC_R1) des ersten Parameters umsetzt und eine Schaltung zum Berechnen der elektronischen Vorrichtung die Berechnung (CALC_R2) des zweiten Parameters umsetzt, wobei diese zwei Berechnungen jeweils mit einer Montgomery-Skala umgesetzt werden.

3. Verfahren zum Sichern nach Anspruch 1 oder 2, das Folgendes aufweist:

/g/ eine Berechnung eines Korrekturterms durch die elektronische Vorrichtung (SC);

/h/ die Verwendung des Korrekturterms durch eine Korrekturschaltung der elektronischen Vorrichtung (SC), um das Ergebnis der modifizierten Umsetzung der Montgomery-Skala zu korrigieren und somit den Wert des Elements $A^\perp A^\perp...^\perp A$ zu erhalten, in dem A k-mal auftritt.

4. Elektronische Vorrichtung (SC), die angeordnet ist, um sich gegen verdeckte Kanalangriffe zu schützen, wenn sie eine Montgomery-Skala umsetzt, um das Element $A^\perp A^\perp...^\perp A$ zu berechnen, in dem A k-mal auftritt, wobei A ein Element einer mit einem Gesetz $^\perp$, versehenen abelschen Gruppe ist und k eine natürliche Zahl, wobei die elektronische Vorrichtung (SC) Folgendes aufweist:

eine Schaltung zum Bestimmen (MCONT) einer ersten natürlichen Zahl r1;

eine Schaltung zum Berechnen (MCONT) eines ersten Parameters R1 = $A^\perp A^\perp...^\perp A$, in dem A rl-mal auftritt;

eine Schaltung zum Bestimmen (MCONT) einer zweiten natürlichen Zahl r2, wobei r2 und r1 nicht Null und unterschiedlich sind;

eine Schaltung zum Berechnen (MCONT) eines zweiten Parameters R2 = $A^\perp A^\perp...^\perp A$, in dem A r2-mal auftritt;

eine Schaltung zum Berechnen (MCONT) einer natürlichen Zahl k' aus der natürlichen Zahl k, der ersten natürlichen Zahl r1 und der zweiten natürlichen Zahl r2, wobei k' die Division von $k-2^{n'}.r1$ durch die Menge r2-rl ist, in der n' eine positive Ganzzahl und N die Elementanzahl der abelschen Gruppe ist;

eine Schaltung zum Berechnen (MCONT) der Montgomery-Skala, die unter Verwendung der natürlichen Zahl k' anstelle der natürlichen Zahl k, des ersten Parameters R1= $A^\perp A^\perp...^\perp A$, in dem A rl-mal auftritt, anstelle eines Parameters R1 = 1 und des zweiten Parameters R2 = $A^\perp A^\perp...^\perp A$, in dem A r2-mal auftritt, anstelle eines Parameters R2 = A modifiziert wurde.

5. Elektronische Vorrichtung (SC) nach Anspruch 4, wobei eine Schaltung zum Berechnen des ersten Parameters und eine Schaltung zum Berechnen des zweiten Parameters angeordnet sind, um diese zwei Berechnungen jeweils mit einer Montgomery-Skala umzusetzen.

6. Elektronische Vorrichtung (SC) nach Anspruch 4 oder 5, die Folgendes aufweist:

eine Schaltung zum Berechnen (MCONT) eines Korrekturterms;

eine Schaltung zum Korrigieren (MCONT), die angeordnet ist zum Verwenden des Korrekturterms, um das Ergebnis der Schaltung zum Berechnen der modifizierten Montgomery-Skala zu korrigieren und somit den Wert des Elements $A^\perp A^\perp...^\perp A$ zu erhalten, in dem A k-mal auftritt.

7. Computerprogramm, das eine Reihe von Anweisungen aufweist, die, wenn sie von einem Prozessor ausgeführt werden, das Verfahren nach einem der Ansprüche 1 bis 3 umsetzen.

8. Computerlesbares nicht flüchtiges Speichermedium, das ein Computerprogramm nach Anspruch 7 speichert.

**Claims**

1. Method for securing an electronic device (SC) against side-channel attacks when the electronic device (SC) implements a Montgomery ladder in order to calculate the element $A\perp A\perp...\perp A$ where A appears k times, A being an element of an abelian group provided with an operation $\perp$, and k a natural number, the method comprising a modified implementation of the Montgomery ladder comprising:

   /a/ a determination (DET_r1), by a determination circuit of the electronic device (SC), of a first natural number r1;
   /b/ a calculation (CALC_R1), by a calculation circuit of the electronic device (SC), of a first parameter $R1=A\perp A\perp...\perp A$ where A appears r1 times;
   /c/ a determination (DET_r2), by a determination circuit of the electronic device (SC), of a second natural number r2, r2 and r1 being non-zero and distinct;
   /d/ a calculation (CALC_R2), by a calculation circuit of the electronic device (SC), of a second parameter $R2=A\perp A\perp...\perp A$ where A appears r2 times;
   /e/ a calculation (CALC_k'), by a calculation circuit of the electronic device (SC), of a natural number k' on the basis of the natural number k, the first natural number r1 and the second natural number r2; k' being the division of $k-2^{n'}.r1$ by the quantity r2-r1, where n' is a positive integer and N the cardinal of the abelian group,
   /f/ an implementation (M_ML), by a calculation circuit of the electronic device (SC), of the Montgomery ladder, modified by using the natural number k' instead of the natural number k, the first parameter $R1=A\perp A\perp...\perp A$ where A appears r1 times instead of a parameter R1=1 and the second parameter $R2=A\perp A\perp...\perp A$ where A appears r2 times instead of a parameter R2=A.

2. Securing method according to claim 1, a calculation circuit of the electronic device implementing the calculation (CALC_R1) of the first parameter and a calculation circuit of the electronic device implementing the calculation (CALC_R2) of the second parameter implementing these two respective calculations with a Montgomery ladder.

3. Securing method according to claim 1 or 2, comprising:

   /g/ a calculation, by the electronic device (SC), of a corrective term;
   /h/ the use, by a correction circuit of the electronic device (SC), of the corrective term in order to correct the result of the modified implementation of the Montgomery ladder and thus obtain the value of the element $A\perp A\perp...\perp A$ where A appears k times.

4. Electronic device (SC) arranged to protect itself against side-channel attacks when it implements a Montgomery ladder in order to calculate the element $A\perp A\perp...\perp A$ where A appears k times, A being an element of an abelian group provided with an operation $\perp$, and k a natural number, the electronic device (SC) comprising:

   a circuit (MCONT) for determination of a first natural number r1;
   a circuit (MCONT) for calculation of a first parameter $R1=A\perp A\perp...\perp A$ where A appears r1 times;
   a circuit (MCONT) for determination of a second natural number r2, r2 and r1 being non-zero and distinct;
   a circuit (MCONT) for calculation of a second parameter $R2=A\perp A\perp...\perp A$ where A appears r2 times;
   a circuit (MCONT) for calculation of a natural number k' on the basis of the natural number k, the first natural number r1 and the second natural number r2, k' being the division of $k-2^{n'}.r1$ by the quantity r2-r1, where n' is a positive integer and N the cardinal of the abelian group;
   a circuit (MCONT) for calculation of the Montgomery ladder, modified by using the natural number k' instead of the natural number k, the first parameter $R1=A\perp A\perp...\perp A$ where A appears r1 times instead of a parameter R1=1 and the second parameter $R2=A\perp A\perp...\perp A$ where A appears r2 times instead of a parameter R2=A.

5. Electronic device (SC) according to claim 4, a circuit for calculation of the first parameter and a circuit for calculation of the second parameter being arranged to respectively implement these two calculations with a Montgomery ladder.

6. Electronic device (SC) according to claim 4 or 5, comprising:

a circuit (MCONT) for calculation of a corrective term;

a correction circuit (MCONT) arranged to use the corrective term in order to correct the result of the circuit for calculation of the modified Montgomery ladder and thus obtain the value of the element $A^{\perp}A^{\perp}...^{\perp}A$ where A appears k times.

7. Computer program comprising a series of instructions which, when they are executed by a processor, implement the method according to one of claims 1 to 3.

8. Medium for non-temporary storage readable by computer storing a computer program according to claim 7.

$$r_2 = RND()$$ ← DET_$r_2$

$$r_1 = f_1(r_2, k)$$ ← DET_$r_1$

$$k' = f_2(r_2, k)$$ ← CALC_k'

$$R_1 = ML(r_1, A, A \perp A)$$ ← CALC_$R_1$

$$R_2 = ML(r_2, A, A \perp A)$$ ← CALC_$R_2$

$$RESULT = ML(k', R_1, R_2)$$ ← M_ML

## FIG. 1

FSC     HODPA     SC     MCONT

## FIG. 2